# EUROPÄISCHE PATENTANMELDUNG

(11) **EP 1 093 866 A2**
(43) Veröffentlichungstag der Anmeldung: **25.04.2001**
(21) Anmeldenummer: 00121995.5
(22) Anmeldetag: 10.10.2000
(51) Int. Cl.: B21B 45/00, B21B 1/46, B23K 7/06

(54) **Verfahren und Vorrichtung zur Verbesserung der Qualität der Oberfläche des Gussstranges einer Stranggiessanlage**

(30) Priorität: 22.10.1999 DE 19950886
(71) Anmelder: SMS Demag AG, 40237 Düsseldorf (DE)
(72) Erfinder: Seidel, Jürgen, 57223 Kreuztal (DE)
(74) Vertreter: Valentin, Ekkehard, Dipl.-Ing.

(57) **Zusammenfassung**

Die Erfindung betrifft ein Verfahren und eine Vorrichtung zur Verbesserung der Qualität der Oberfläche des Gussstranges (11) einer Stranggießanlage, vorzugsweise einer Dünnbrammengießanlage durch Inline-Abtragung von dessen Oberfläche. Eine optimale Walzgutqualität wird angestrebt und dadurch erhalten, dass nach dem Gießen ein Inline-Aufheizen in einem Tunnelofen (2) und das Inline-Abtragen kurz vor dem Inline-Walzen (3) des Gussstranges (11) durch eine Inline-Flämmmaschine bzw. Flämmeinheiten (6, 8) erfolgen.

## Beschreibung

Die Erfindung bezieht sich auf ein Verfahren und eine Vorrichtung zur Verbesserung der Qualität der Oberfläche des Gussstranges einer Stranggießanlage, vorzugsweise einer Dünnbrammengießanlage durch Inline-Abtragung von dessen Oberfläche.

In Stranggießanlagen, insbesondere von Dünnbrammengießanlagen werden Gussstränge mit Endprodukt nahen Abmessungen erzeugt, die zu kostengünstigen Walzprodukten führen. Da Dünnbrammen nahe am Endprodukt liegen, ist deren glatte und fehlerfreie Oberfläche wichtig.

Es zeigt sich jedoch, dass die auf kontinuierlichen Stranggießanlagen erzeugten Brammen, Platinen oder sonstigen Rohmaterialien Oberflächenfehler besitzen, die auf kleinere Änderungen der Betriebsbedingungen der kontinuierlichen Stranggießanlage zurückzuführen sind. Im einzelnen handelt es sich hierbei um auf oszillierende Bewegungen der Stranggießform zurückzuführende Oszillationsmarkierungen oder um Schlackeneinschlüsse durch nichtmetallische Bestandteile, die auf Schmelz- oder Abriebverluste von feuerfestem Material der Gießpfanne zurückzuführen sind. Weiterhin sind Fein-lunker oder Blasen bekannt, die direkt unter der Oberfläche der Gussstücke liegen und beim Anstieg des Sauerstoffgehaltes der Metallschmelze entstehen. Schließlich besitzen derartige Oberflächen auch in Längs- und/oder Querrichtung verlaufende Risse bzw. Rillen.

Es ist beim kontinuierlichen Stranggießen schwierig, das Entstehen derartiger Oberflächenfehler bzw. Oberflächenrauhigkeiten unter Kontrolle zu bringen oder ganz zu vermeiden, insbesondere wenn diese Fehler durch unvermeidliche leichte Schwankungen oder Veränderungen der Betriebsbedingungen der Stranggießanlage entstehen.

Während des Transportes einer Dünnbramme durch einen Tunnelofen, der die Dünnbramme auf Walztemperatur bringt, können u. U. auf deren Unterseite im Bereich der Scheiben der Ofenrollen Oberflächenbeschädigungen entstehen. Die Tiefe der Riefen hängt ab von Materialgüte, Ofentemperatur, Grad der Aufbackungen auf den Ofenrollen, Zunder-Schichtdicke, Anpressdruck (Scheibenbreite, Dünnbrammendicke und -breite), Relativgeschwindigkeit zwischen Dünnbramme und Ofenrollen etc.. Weiterhin entsteht bei einer eventuell langen Verweildauer einer Bramme im Ofen ein schwer bzw. nur teilweise zu entfernender Primärzunder. Bei anspruchsvollen Verwendungszwecken können diese Effekte störend sein.

Beim Gießen von Edelstahl-Dünnbrammen treten im Bereich der Oszillationsmarken und dort vorliegenden Schlackeneinflüssen Oberflächenfehler auf. Diese führen am Warm- bzw. Kaltband zu Flecken und Schattierungen. Da bei Edelstahl höchste Anforderungen an die Oberfläche gestellt werden, müssen auch konventionelle Brammen nachgearbeitet werden. Einige der Oberflächenfehler können durch einen anschließenden Walzvorgang behoben werden, jedoch haben Schlackeneinflüsse und in Längs- sowie Querrichtung verlaufende Oberflächenrisse einen direkten Einfluss auf die Oberflächeneigenschaften von gewalzten Stahlplatten oder sonstigen Walzprodukten. Deshalb ist es notwendig, diese Oberflächenfehler vor dem Weiterverarbeiten insbesondere der Dünnbrammen zu entfernen und somit die Oberflächenqualität derselben zu verbessern.

Um eine befriedigende Oberfläche von Brammen oder sonstigen Rohmaterialien zu erreichen, hat man bisher die Brammen oder dergleichen im Anschluss an den Stranggießvorgang abkühlen lassen und im kalten Zustand oberflächlich abgeflämmt oder abgebrannt und nach Oberflächenkontrolle gegebenenfalls einer spanabhebenden Nachbearbeitung unterzogen. Das bedeutet, dass man bisher stranggegossene Brammen oder sonstige Rohmaterialien, die beispielsweise zum Herstellen von Stahlblech bestimmt sind, mit zufrieden stellender Oberfläche dadurch erhielt, dass diese Brammen nach dem Stranggießvorgang gekühlt wurden und danach deren Oberfläche sorgfältig überprüft wurde um gegebenenfalls eine Nacharbeit durchzuführen.

Andererseits ist das Abflämmen oder Abbrennen der Oberflächen von Gussstücken bei 1000 bis 1300 Grad Celsius bekannt und wird als sogenanntes Heißflämmen bezeichnet. Dieses Heißflämmen wird unabhängig vom Vorwalzen und Fertigwalzen der Bramme oder Platine bzw. unabhängig von der Blechwalzstraße und nach einem Aufheizvorgang der Bramme oder Platine durchgeführt, um die Oberflächentemperatur derselben auf 1000 bis 1300 Grad Celsius zu bringen, wozu ein Heiß- oder Herdofen erforderlich sind.

In der deutschen Offenlegungsschrift DE 23 44 605 A1 wird der Gussstrang nach dem Gießen bei mittleren Temperaturen von 500 bis 900 Grad Celsius heiß geflämmt und anschließend auf eine Temperatur unter 400 Grad Celsius abgekühlt. Dadurch ist der Gussstrang zwar einer erneuten Verzunderung entzogen, muss aber vor dem Walzen mit hohem Energieaufwand wieder aufgeheizt werden.

In der japanischen Veröffentlichung JP 10314908 wird ein Verfahren beschrieben, bei dem der Gussstrang unmittelbar nach dem Stranggießen durch einen Inline-Plasma-Lichtbogen beidseitig heißgeflämmt wird. Über die weitere Bearbeitung des Gussstranges und die Vermeidung neuer Oberflächenfehler sind in dieser Druckschrift keine Angaben gemacht.

Der Erfindung liegt die Aufgabe zugrunde, aus einem Gussstrang einer Stranggießanlage mit geringstmöglichem Energieaufwand ein hochwertiges Walzprodukt herzustellen. Diese Aufgabe wird gelöst durch die kennzeichnenden Merkmale des Verfahrensanspruchs 1 und des unabhängigen Vorrichtungsanspruchs 8.

Gemäß der Erfindung wird die Temperatur des Gussstranges nach dem Erstarren desselben mit geringem Energieaufwand auf einen zum Walzen erforderlichen Wert (z. B. 1100 Grad Celsius) gebracht. Kurz vor dem anschließend folgenden Walzen wird die Abtragung der Oberfläche des Gussstranges vorgenommen. Ziel ist es, sehr schnell nach der Abtragung den Gussstrang zu walzen, damit die Qualität der abgetragenen Oberfläche konserviert und eine Nachoxidation verhindert bzw. vermindert wird, um dadurch weitgehend fehlerlose Walzprodukte zu erhalten.

Die Abtragung kann durch Lichtbogen oder Laserstrahlen oder mechanische Mittel erfolgen. Besonders vorteilhaft geschieht sie durch Flämmen mittels Gasflammen; es ist auch Gasflämmen mit anschließender mechanischer Nacharbeit denkbar. Es ist vorgesehen, das abgetragene Material dem Produktionsprozess (Stahlwerk, Elektroofen) wieder zuzuführen.

Es ist bekannt, dass zur Beseitigung von Oberflächenfehlem (Rissen, Schlackeneinflüssen, Oszillationsmarken etc.) an Brammen, Blöcken und Knüppeln das Flämmen angewendet wird. Das Flämmen kann man im kalten wie im warmen Zustand der zu flämmenden Teile durchführen. Da im vorliegenden Fall der Gussstrang auf Walztemperatur aufgeheizt ist, handelt es sich zweifelsfrei um Heissflämmen. Der zum Heißflämmen erforderliche Energieaufwand ist wegen der hohen Temperatur des Gussstranges relativ gering. Diese ermöglicht eine hohe Flämmgeschwindigkeit und damit ein effizientes Flämmen. Dabei wird dem Gussstrang Energie zugeführt, die eventuelle Energieverluste auf dem kurzen Weg zur Walzstraße zumindest ausgleicht. Die hohe Temperatur des Gussstranges führt zu einer Entlastung der Walzstraße oder bei gleicher Belastung zu dünneren Bändern, die bei ausreichend hohen Endwalztemperaturen hergestellt werden können.

Von Vorteil ist, wenn der Gussstrang im Anschluss an die Heißflämmung unter Inertgas oder Rauchgas gehalten wird. Dadurch wird trotz dessen hoher Temperatur eine Sekundärzunderbildung vermieden, zumindest aber wesentlich vermindert. Die dadurch bedingte fehlerlose Oberfläche des Gussstranges führt unter Umständen auch zu geringerem Arbeitswalzen-verschleiß bzw. zu weniger Walzenschälen.

Die Heißflämmung dient zur Behandlung der Oberfläche des Gussstranges auf ganzer Breite oder zur selektiven Beseitigung von detektierten Rissen, Einschlüssen, Vertiefungen etc. und zur Beeinflussung des Dickenprofils bzw. der Oberflächengeometrie desselben. Dadurch kann dessen Oberfläche mit geringstmöglichem Energieaufwand geglättet werden.

Es ist vorteilhaft, dass das Heißflämmen zumindest teilweise als Ersatz für einen Zunderwäscher dient. Das ist möglich, da mit dem Flämmprozess vor der Walzstraße auch der Primärzunder bzw. die Oxidschicht entfernt werden. Dadurch können der Zunderwäscher und seine Hochdruckwasserversorgung entfallen. Die mit der Entzunderung verbundene Abkühlung des Gussstranges, insbesondere die durch Überlaufen des Wassers verursachte Abkühlung der Strangkanten und die Streifenbildung durch Entzunderungsdüsen werden vermieden, was sich vorteilhaft auf die Bandqualität auswirkt. Die Entzunderung durch Flämmen und ohne Wassereinsatz ergibt ein höheres Temperaturniveau des Gussstranges, mit den bekannten Vorteilen.

Eine weitere Energieeinsparung wird dadurch erreicht, dass die Intensität bzw. die Tiefe der Heißflämmung in Abhängigkeit detektierter Fehler oder Dickenabweichungen sowie unterschiedlicher Einzugsgeschwindigkeiten des Gussstranges über dessen Breite und Länge geregelt bzw. variiert werden, da nur die für eine Mindestflämmtiefe bzw. eine konstante Flämmtiefe jeweils erforderliche Flämmenergie zum Einsatz kommt.

Es bietet sich an, den Brammenkopf in Dickenrichtung beim Anflämmen des Gussstranges durch Heißflämmen anzuspitzen. Dadurch werden die Anstichstöße der Walzstraße vermindert.

Die Aufgabe der Erfindung wird auch durch eine Stranggießanlage, vorzugsweise eine Dünnbrammengießanlage gelöst, die insbesondere zur Durchführung des erfindungsgemäßen Verfahrens dient. Der Dünnbrammengießanlage sind ein Tunnelofen und eine Walzstraße nachgeschaltet und kurz vor der Walzstraße ist eine Inline-Flämmmaschine angeordnet. Im Tunnelofen wird der soeben erstarrte Gussstrang mit geringem Energieaufwand auf Walztemperatur erhitzt und kurz vor der Walzstraße mit der Flämmmaschine heißgeflämmt. Dabei werden alle Fehlstellen und der Primärzunder der Oberfläche des Gussstranges beseitigt, so dass dieser mit glatter Oberfläche und ohne Nachoxidation in die Walzstraße gelangt. Die Entzunderung durch Heißflämmen erübrigt einen separaten Zunderwäscher mit seinen baulichen und funktionellen Nachteilen, wie Hochdruckwasserversorgung und Abkühlen des Gussstranges. Dieser wird durch Heißflämmen weiter aufgeheizt, so dass die Walzstraße entlastet wird.

Wenn der Gussstrang nach der Flämmmaschine und ggf. zwischen den vorderen Walzgerüsten eine isolierende Einhausung bzw. Abdeckung aufweist, die mit Inertgas bzw. Rauchgas begasbar ist, werden die Wärmeverluste und damit eine Temperatur-senkung des Gussstranges vermindert und seine Oxidation verhindert, wodurch die Walzstraße entlastet und die Bandqualität erhöht wird.

Eine Weiterbildung der Erfindung besteht darin, dass die Flämmmaschine mit für die Unterseite des Gussstranges allein oder für dessen Unter- und Oberseite getrennt und in Walzrichtung versetzt angeordneten Flämmeinheiten oder als Vier-Seiten-Flämmanlage ausgebildet ist. Die Flämmeinheiten dienen der Beseitigung von Oberflächenfehlem, die aus dem Gießprozess oder dem Transport durch den Tunnelofen herrühren. Beim Gießprozess entstehen Primärzunder, Risse und Einschlüsse, beim Transport durch den Tunnelofen bilden sich Riefen durch die scheibenförmigen Ofenrollen. Die versetzte Anordnung der unteren und oberen Flämmeinheiten dient einer sicheren Fahrweise.

Wenn die Flämmeinheiten eine Vielzahl von Gasbrennem aufweisen, die in vorzugsweise zwei zueinander und zum Gussstrang geneigten und hintereinander positionierten sowie um eine halbe Teilung gegeneinander versetzten Reihen angeordnet und gemeinsam horizontal oszillierbar sind, wird eine gleichmäßige Flämmung mit glatter Oberfläche und konstanter Temperatur erreicht, was vor allem für endproduktnahe Dünnbrammen wichtig ist.

Eine weitere vorteilhafte Ausbildung der Erfindung besteht darin, dass der Abstand der Gasbrenner zum Gussstrang und deren Gasdruck sowie deren Aus- und Einschalten getrennt und kontinuierlich regelbar sind. Auf diese Weise kann die Flämmtiefe rasch und genau sowie lokal oder in ganzer Breite des Gussstranges eingestellt bzw. geregelt werden.

Zur Steuerung und Überwachung der Flämmeinheiten sind Oberflächentemperaturscanner, Rauhigkeit- oder Profilmessgeräte und Bildüberwacher gegebenenfalls vor und/oder hinter den Flämmeinheiten vorgesehen.

Beim Anflämmen ist es vorteilhaft, wenn die Flämmeinheiten kurzzeitig synchron mit dem Gussstrang mitbewegbar oder der Gussstrang im Bereich der Flämmeinheiten kurz anhaltbar ist. Auf diese Weise wird die angestrebte Flämmtiefe vom Start des Flämmens an erreicht.

Weitere Merkmale der Erfindung ergeben sich aus den Patentansprüchen, der folgenden Beschreibung und der Zeichnung, in der Ausführungsbeispiele der Erfindung schematisch dargestellt sind.

Es zeigen:
- Fig. 1: ein Schema einer Gießwalzanlage mit einer unteren Flämmeinheit und einem Zunderwäscher,
- Fig. 2: die gleiche Anlage, jedoch mit der unteren und einer oberen Flämmeinheit und ohne Zunderwäscher,
- Fig. 3: eine Seitenansicht der oberen Flämmeinheit mit zwei Brennerreihen,
- Fig. 4: eine Draufsicht auf die obere Flämmeinheit der Fig. 3.

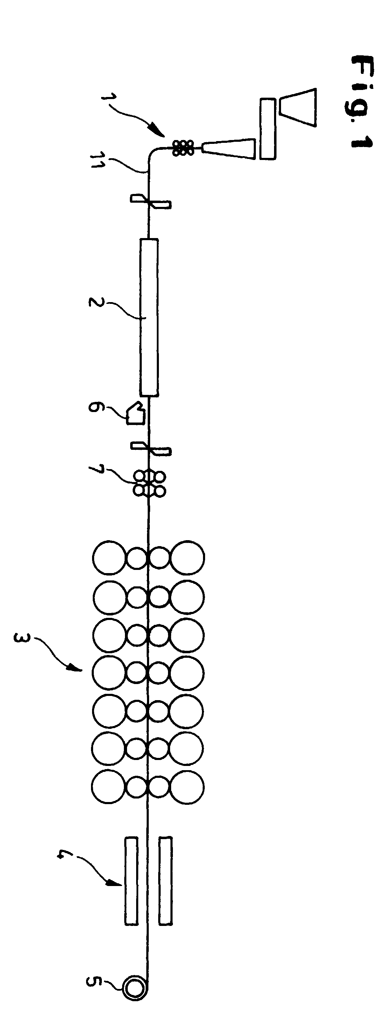

Figur 1 zeigt eine Gießwalzanlage mit einer Stranggießmaschine 1 zur Erzeugung eines Gussstranges 11, der ein Tunnelofen 2, eine Walzanlage 3, eine Kühlanlage 4 und ein Haspel 5 inline nachgeschaltet sind. Hinter dem Tunnelofen 2 befindet sich eine untere Inline-Flammeinheit 6 und kurz vor der Walzanlage 3 ein Zunderwäscher 7.

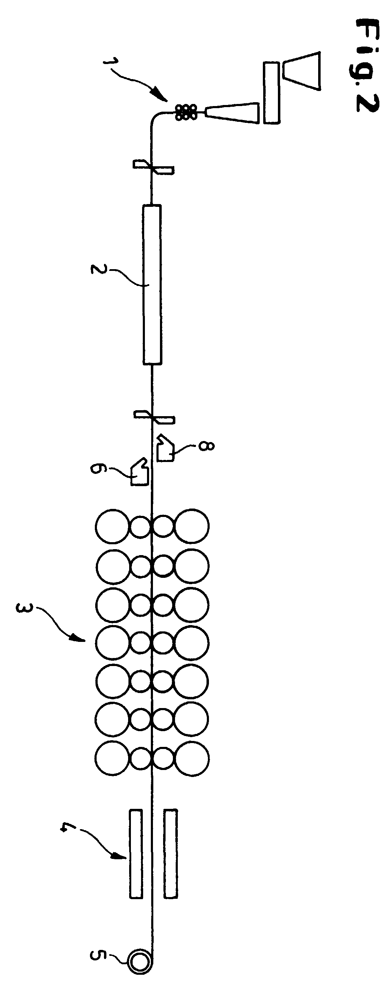

In Figur 2 ist die gleiche Gießwalzanlage dargestellt, jedoch anstelle des Zunderwäschers 7 sind die untere Inline-Flämmeinheit 6 und eine obere Inline-Flämmeinheit 8 getreten; diese sind in Walzrichtung gesehen versetzt angeordnet. Die Flämmeinheiten 6, 8 sind kontinuierlich höhenverstellbar und seitlich oszillierbar ausgebildet

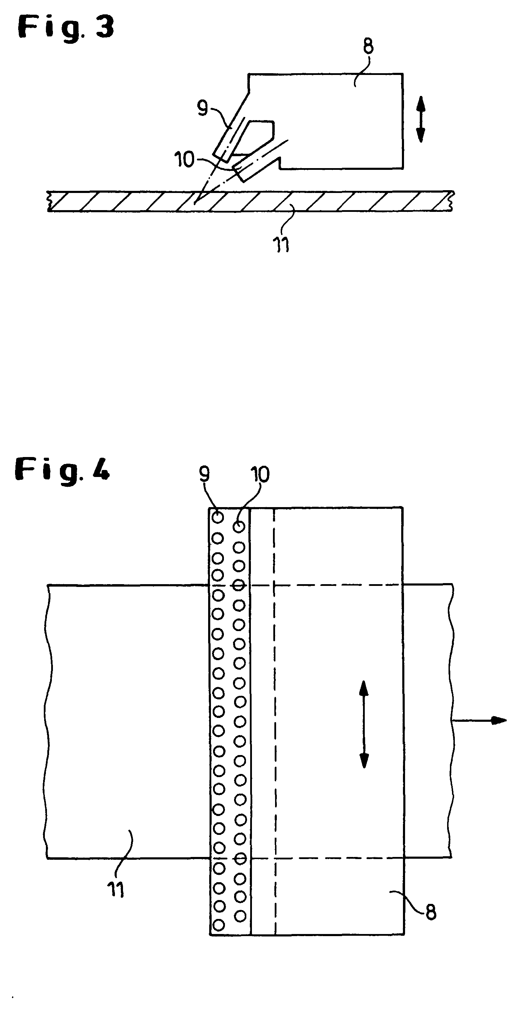

Figur 3 zeigt die obere Flämmeinheit 8 in Seitenansicht, mit einer vorderen Brennerreihe 9 und einer hinteren Brennerreihe 10, die jeweils mit Gas- und Sauerstoffzuführung versehen und die zueinander und zum Gussstrang 11 geneigt sind. Die Achsen der Brennerreihen 9, 10 treffen eine gemeinsame Linie auf der Oberseite des Gussstranges 11. Eine ähnliche Anordnung ist für die Unterseite des Gussstranges 11 vorgesehen.

In Figur 4 ist eine Draufsicht auf die obere Flämmeinheit 8 mit der vorderen und hinteren Brennerreihe 9, 10 dargestellt, die um einen halben Brennerabstand seitlich versetzt angeordnet sind.

Die erfindungsgemäße Gießanlage funktioniert folgendermaßen:

Der in der Stranggießmaschine 1 erzeugte Gussstrang 11 wird im anschließenden Tunnelofen 2 auf eine Walztemperatur von ca. 1100 Grad Celsius erhitzt. Bei der in Fig. 1 dargestellten Ausführung der Erfindung werden die z. B. von den Scheiben der Ofenrollen auf der Unterseite des Gussstranges 11 verursachten Riefen durch die kurz nach dem Tunnelofen 2 angeordnete untere Flämmeinheit 6 und der primäre Zunder durch den kurz vor der Walzanlage 3 angeordneten Zunderwäscher 7 beseitigt. Der geflämmte und gereinigte Gussstrang 11 wird in der Walzanlage 3 gewalzt, anschließend in der Kühlanlage 4 abgekühlt und auf dem Haspel 5 aufgewickelt. Bei der in Fig. 2 dargestellten konsequenten Weiterentwicklung der Gießwalzanlage nach Fig. 1 ist der Zunderwäscher 7 durch die untere Flämm-einheit 6 und eine obere Flämmeinheit 8 ersetzt, die beide kurz vor der Walzanlage 3 angeordnet sind. Die Vielzahl der Brenner und ihre Anordnung, Lage, Bewegung und Steuerung bewirken, dass der Gussstrang 11 mit glatter Oberfläche, d. h. weitgehend ohne Primär- und Sekundärzunder, Risse, Ein-schlüsse etc. und mit einer gewünschten Oberflächengeometrie in die Walzanlage 3 eintritt und ein Walz- bzw. Endprodukt hoher Qualität erzeugt wird.

Diese hohe Qualität kann auch durch einen nicht dargestellten Inertgasschutz des Gussstranges weiter verbessert werden.

### Bezugszeichenliste

- 1: Stranggießmaschine
- 2: Tunnelofen
- 3: Walzanlage
- 4: Kühlanlage
- 5: Haspel
- 6: untere Flämmeinheit
- 7: Zunderwäscher
- 8: obere Flämmeinheit
- 9: obere Brennerreihe
- 10: untere Brennerreihe
- 11: Gussstrang

## Patentansprüche

1. Verfahren zur Verbesserung der Qualität der Oberfläche des Gussstranges (11) einer Stranggießanlage, vorzugsweise einer Dünnbrammengießanlage durch Inline-Abtragung von dessen Oberfläche, **dadurch gekennzeichnet**, dass nach dem Gießen ein Inline-Aufheizen und das Inline-Abfragen kurz vor dem Inline-Walzen des Gusstranges (11) erfolgen.

2. Verfahren nach Anspruch 1, **dadurch gekennzeichnet**, dass die Abtragung durch Lichtbogen oder Laserstrahlen oder mechanische Mittel, vorzugsweise jedoch durch Heißflämmen mit oder ohne mechanisches Nacharbeiten erfolgt.

3. Verfahren nach Anspruch 2, **dadurch gekennzeichnet**, dass der Gussstrang (11) im Anschluss an das Heißflämmen unter Inertgas oder Rauchgas gehalten wird.

4. Verfahren nach Anspruch 2 oder 3, **dadurch gekennzeichnet**, dass das Heißflämmen auf ganzer Breite des Gussstranges (11) oder zur selektiven Beseitigung von detektierten Rissen, Einschlüssen, Vertiefungen etc. und zur Beeinflussung des Dickenprofils bzw. der Oberflächengeometrie desselben eingesetzt wird.

5. Verfahren nach einem oder mehreren der Ansprüche 2 bis 4, **dadurch gekennzeichnet**, dass das Heißflämmen zumindest teilweise als Ersatz für einen Zunderwäscher dient.

6. Verfahren nach einem oder mehreren der Ansprüche 2 bis 5, **dadurch gekennzeichnet**, dass die Intensität bzw. die Tiefe des Heißflämmens in Abhängigkeit detektierter Fehler oder Dickenabweichungen sowie unterschiedlicher Einzugsgeschwindigkeiten des Gussstranges (11) über dessen Breite und Länge geregelt bzw. variiert werden.

7. Verfahren nach Anspruch 6, **dadurch gekennzeichnet**, dass der Brammenkopf in Dickenrichtung beim Anflämmen des Gussstranges (11) durch Heißflämmen angespitzt wird.

8. Stranggießanlage zur Verbesserung der Qualität des Gussstranges (11) einer Stranggießanlage, vorzugsweise einer Dünnbrammengießanlage durch Inline-Abtragung von dessen Oberfläche, insbesondere zur Durchführung des Verfahrens nach einem oder mehreren der vorhergehenden Ansprüche, **dadurch gekennzeichnet**, dass der Dünnbrammengießanlage ein Tunnelofen (2) und eine Walzstraße (3) nachgeschaltet sind und dass kurz vor der Walzstraße (3) zumindest eine Inline-Flämmmaschine angeordnet ist.

9. Stranggießanlage nach Anspruch 8, **dadurch gekennzeichnet**, dass der Gussstrang (11) nach der Flämmmaschine und ggf. zwischen den vorderen Walzgerüsten der Walzanlage (3) eine isolierende Einhausung bzw. Abdeckung aufweist, die mit Inertgas oder Rauchgas begasbar ist.

10. Stranggießanlage nach Anspruch 8 oder 9, **dadurch gekennzeichnet**, dass die Flämmmaschine mit für die Unterseite des Gussstranges (11) allein oder für dessen Unter- und Oberseite getrennt und in Walzrichtung versetzt angeordneten Flämmeinheiten (6, 8) oder als Vier-Seiten-Flämmanlage ausgebildet ist.

11. Stranggießanlage nach Anspruch 10, **dadurch gekennzeichnet**, dass die Flämmeinheiten (6, 8) eine Vielzahl von Gasbrennern aufweisen, die in vorzugsweise zwei zueinander und zum Gussstrang geneigten und hintereinander positionierten sowie um eine halbe Teilung gegeneinander versetzten Brennerreihen (9, 10) angeordnet und gemeinsam horizontal oszillierbar sind.

12. Stranggießanlage nach Anspruch 10 oder 11, **dadurch gekennzeichnet**, dass der Abstand der Flämmeinheiten (6, 8) zum Gussstrang (11) und deren Gasdruck sowie das Aus- und Einschalten der einzelnen Brenner getrennt und kontinuierlich regelbar sind.

13. Stranggießanlage nach einem oder mehreren der Ansprüche 10 bis 12, **dadurch gekennzeichnet**, dass zur Steuerung und Überwachung der Flämmeinheiten (6, 8) Oberflächentemperaturscanner, Rauhigkeit- oder Profilmessgeräte und Bildüberwacher ggf. vor- und/oder hinter den Flämmeinheiten (6, 8) vorgesehen sind.

14. Stranggießanlage nach einem oder mehreren der Ansprüche 10 bis 13, **dadurch gekennzeichnet**, dass die Flämmeinheiten (6, 8) beim Anflämmen kurzzeitig synchron mit dem Gussstrang (11) mitbeweg bar oder der Gussstrang (11) im Bereich der Flämmeinheiten (6, 8) kurz anhaltbar sind.
